# EUROPÄISCHE PATENTANMELDUNG

(11) **EP 2 179 845 A1**
(43) Veröffentlichungstag der Anmeldung: **28.04.2010**
(21) Anmeldenummer: 08167641.3
(22) Anmeldetag: 27.10.2008
(51) Int. Cl.: B32B 27/32, C09J 7/02

(54) **Mehrschichtverbundfolie**

(71) Anmelder: LANXESS Deutschland GmbH, 51369 Leverkusen (DE)
(72) Erfinder: Kremers, Arndt, Dr., 51246 Würselen (DE); Herrmann, Michael, 50829 Köln (DE)

(57) **Zusammenfassung**

Bereitgestellt werden neue Mehrschichtverbundfolien aus mindestens drei Schichten, enthaltend eine Klebeschicht aufgebaut aus mindestens einem α-Olefin-Vinylacetat-Copolymer mit einem Vinylacetat-Gehalt von ≥ 40 Gew.-%, bezogen auf das Gesamtgewicht des α-Olefin-Vinylacetat-Copolymeren. Diese Mehrschichtverbundfolien eignen sich zur Verpackung von Produkten und zur Nutzung als Schutzfolie. Die Herstellung ist über Blasfolienextrusion möglich.

## Beschreibung

Die vorliegende Erfindung betrifft eine Mehrschichtverbundfolie aus mindestens drei Schichten, enthaltend eine Klebeschicht aufgebaut aus mindestens einem α-Olefin-Vinylacetat-Copolymer mit einem Vinylacetat-Gehalt von ≥ 40 Gew.-%, bezogen auf das Gesamtgewicht des α-Olefin-Vinylacetat-Copolymeren. Die Erfindung betrifft ferner ein Verfahren zur Herstellung dieser Mehrschichtverbundfolien über Blasfolienextrusion sowie die Verwendung der Mehrschichtverbundfolien zur Verpackung von Produkten und zur Nutzung als Schutzfolie.

Mehrschichtverbundfolien werden heutzutage in einer Vielfalt von Anwendungen eingesetzt. Einen großen Markt stellt die Verpackungsindustrie für Lebensmittel oder Arzneien dar, angefangen von einfachen Verpackungsfolien bis hin zu Hygiene- oder Laminierfolien. Eine große Nachfrage besteht inzwischen auch nach sogenannten Schutzfolien für unterschiedlichste Oberflächen. Derartige Schutzfolien sollen die Oberflächen aus verschiedenen Materialien gegen äußere Einflüsse, insbesondere Verschmutzung, und mechanische Beschädigung schützen. Für die Eignung als Schutzfolie ist es entscheidend, dass diese Schutzfolie auf der zu schützenden Oberfläche ausreichend haftet bzw. klebt, gleichzeitig aber leicht wieder abzuziehen ist ohne Rückstände auf der Oberfläche zu hinterlassen.

### Verschiedene Typen mehrlagiger selbstklebender Schutzfolien sind bereits bekannt:

In der DE 195 32 220 A1 werden beispielsweise selbstklebende Schutzfolien für den Einsatz im Automobilbereich beschrieben. Bei diesen Folien handelt es sich um 2-Schichtfolien, bei denen auf eine Trägerfolie, vorzugsweise aus Polyethylen und/oder Polypropylen, eine Selbstklebemasse aus Polyethylenvinylacetat, charakterisiert durch den bei unterschiedlichen Bedingungen gemessenen Verlustwinkel tan δ, aufgebracht ist. Diese 2-Schichtfolien werden ausschließlich hergestellt, indem die Selbstklebemasse in einer Beschichtungsanlage mit Streichbalken auf die Trägerfolie aufgebracht wird. Weitere Methoden zur Herstellung werden nicht offenbart.

Aus der DE 196 35 704 A1 sind selbstklebende Schutzfolien bekannt, bei denen auf eine Trägerfolie eine Selbstklebemasse bestehend aus Polyvinylacetat aufgetragen wird. Die Trägerfolie basiert auf einer speziellen Mischung aus Polyethylen, Polypropylen, Titandioxid und Lichtschutzstabilisatoren in genau vorgebenen Mengenanteilen, Die Selbstklebemasse basiert auf Polyvinylacetat mit einem Vinylacetat-Gehalt von 40 Mol-% bis 80 Mol-%. Es wird ferner offenbart, dass zwischen Trägerfolie und Selbstklebemasse ein Vorstrich aus Polyethylenvinylacetat mit einem Polyethylenanteil von 30 bis 50 Gew.-Teilen und 0,3-0,7 Gew.-Teilen Lichtschutzstabilisatoren aufgebracht sein kann. Die Herstellung der Verbundfolie erfolgt durch Aufbringung der Selbstklebemasse auf die Trägerfolie entweder aus der Lösung oder aus der Schmelze. Sofern die Trägerfolie den og. Vorstrich aufweist, kann die Trägerfolie mit dem Vorstrich auch coextrudiert werden. Weitere Möglichkeiten zur Herstellung werden nicht offenbart.

In der DE 197 42 805 A1 wird eine weitere selbstklebende Schutzfolie auf Basis einer Trägerfolie und einer Klebemasse beschrieben. Die Trägerfolie basiert auf Polyolefinen wie z.B. Polyethylen, Polypropylen oder Mischungen daraus. Die Klebeschicht basiert auf einem im Wesentlichen amorphen Copolymer aus mindestens zwei verschiedenen α-C₂-C₁₂-Olefin Monomeren sowie mindestens einem Dien als Comonomeren, wobei kein α-Olefin einen Anteil von 75 Mol% oder mehr haben soll. Als Diene werden 1,4-Hexadien, Dicyclopentadien und insbesondere 5-Ethyliden-2-norbornen (ENB) beschrieben. Der Anteil der weiteren Comonomeren im Polymer der Klebeschicht, wie z.B. Vinylacetat, soll unter 30 Mol%, bevorzugt unter 20 Mol% liegen, bevorzugt wird jedoch auf das polare Monomere in der Klebemasse ganz verzichtet. Optional kann sich zwischen Trägerfolie und Klebemasse eine Haftvermittlerschicht befinden, bei der es sich um ein Polymer aus überwiegend olefinischen Monomeren handelt. Bevorzugt werden als Basis für den Haftvermittler thermoplastische EPM- oder EPDM-Elastomeren, Ionomere auf Basis von Ethylen(meth)acrylsäurecopolymeren oder Maleinsäureanhydrid-modifizierten Polyolefinen genannt. Der Haftvermittler kann durch normale Coextrusion mit der Basisfolie oder durch Coextrusion mit Basisfolie und Kleber oder durch Beschichtung (mittels Streichbalken) auf der Basisfolie aufgebracht werden. In Beispiel 3 wird eine 3-Schichtfolie durch normale Coextrusion hergestellt, mit einer Polyolefin-basierten Trägerschicht und einem Terpolymer aus Ethylen (E), Propylen (P) und ENB als klebender Deckschicht. Die Haftvermittlerschicht ist eine Mischung des E/PE/ENB-Terpolymers und einer recycelten Schutzfolie aus Beispiel 1. Andere Herstellungsmethoden für die Schutzfolien werden nicht beschrieben.

In der DE 199 23 780 A1 wird eine selbstklebende Schutzfolie beschrieben, deren Trägerfolie mindestens ein ungerecktes Polypropylen-Blockcopolymer und die Klebeschicht beispielsweise ein Ethylen-Vinylacetat-Copolymer mit einem Vinylacetat-Gehalt von mindestens 40 Gew.%, bevorzugt 55 bis 70 Gew.% enthält. Eine 3-Schicht-Verbundfolie mit dazwischen liegender Haftvermittlerschicht kann mit Trägerfolie und Klebeschicht durch normale Coextrusion hergestellt werden. Bei der in Beispiel 3 beschriebenen Herstellung der Schutzfolie durch Coextrusion wird eine Haftvermittlerschicht auf Basis von Escorene^{®} Ultra UL 00728 eingesetzt, welches einen Vinylacetat-Gehalt von 27,5 Gew.% aufweist. Andere Herstellungsmethoden für die Schutzfolien werden nicht beschrieben.

In der DE 199 54 700 A1 wird eine 3-Schicht-Selbstklebefolie beschrieben aus Trägerschicht, Primer und Klebeschicht. Für die Trägerschicht werden Polyolefine eingesetzt, als Primer werden EVA Typen mit einem VA Anteil von 20 bis 30 Gew.% verwendet. Die Klebeschicht basiert auf einem Polyvinylacetat mit einem Vinylacetat-Gehalt im Bereich von 40 bis 80 Gew.%.. Es ist jedoch zwingend, das Polyvinylacetat in der Klebemassen mit 1 bis 35 Gew.% eines Polyethers abzumischen. Die Klebemasse lässt sich sowohl aus Lösung als auch aus der Schmelze, als Hotmelt, oder durch normale Coextrusion verarbeiten. Weitere Herstellungsmethoden für die Schutzfolien werden nicht beschrieben.

Die DE 100 07 060 A1 offenbart eine selbstklebende Schutzfolien mit einer ein- oder mehrlagigen Trägerschicht (einer thermoplastische Polyolefinfolie) und einer Klebeschicht, wobei die Klebeschicht essentiellerweise aus einer polaren Komponente A (enthaltend ein Polyvinylacetat mit einem Vinylacetat-Gehalt von 40 bis 80 Gew:%) und einer unpolaren Komponente B (einem α-Olefin basierten Homo- oder Copolymer) besteht. Als Haftvermittlerschicht wird in der DE 100 07060 A1 eine Mischung aus einem Polypropylen-Blockcopolymer und einem Polyethylenvinylacetat mit 27,5 Gew.% Vinylacetat (Escorene^{®} Ultra UL 00728) eingesetzt. Als einzige Methode zur Herstellung wird in Ansatz [0039] die auch aus den anderen oben genannten Literaturstellen bekannte normale Dreischichtflachfoliencoextrusion genannt.

In der DE 101 23 985 A1 wird eine weitere selbstklebende Schutzfolie für Glasoberflächen mit poröser SiO₂ Antireflex Schicht beschrieben. Es handelt sich ebenfalls um eine 3-Schicht-Verbundfolie aus Trägerschicht (auf Polyolefin Basis) und Klebeschicht, bei der neben dem Polyethylenvinylacetat mit einem Vinylacetat Gehalt von mindestens 40 Gew.% zwingend als Additiv Polyalkylenglykole zugegen sein müssen. Als Primer (Haftvermittlerschicht) werden EVA Polymere mit einem Vinylacetat-Gehalt von 20 bis 50 Gew.% eingesetzt. Die Klebemasse wird in den Beispielen aus Lösung auf die vorbehandelte Trägerschicht aufgebracht. Als möglich wird auch die Aufbringung aus der Schmelze, als Hotmelt, oder erneut durch normale Coextrusion genannt. Weitere Herstellungsmethoden für die Schutzfolien werden nicht beschrieben.

Auch aus DE 199 54 701 A1 und DE 103 03 537 A1 sind weitere selbstklebende Oberflächenschutzfolien bekannt mit einer Trägerschicht aus Polypropylen oder Propylenethylencopolymeren und einer Selbstklebemasse aus Polyethylenvinylacetat mit einem Vinylacetat Gehalt von 40 bis 80 Gew.% und einem Polyether. Die Primerschicht kann wie in der DE 101 23 985 A1 ein EVA Polymer mit einem Vinylacetat-Gehalt von 20 bis 50 Gew.% umfassen. Den in der DE 101 23 985 A1 beschriebenen Herstellungsverfahren fügen der DE 199 54 701 A1 und DE 103 03 537 A1 nichts hinzu.

Aus der DE 103 18 151 A1 sind selbstklebende Schutzfolien bekannt mit einer Trägerschicht aus einer thermoplastischen Folie, vorzugweise aus Polyolefinen, und einer Selbstklebeschicht aus Butylkautschuk, der einen definierten Isoprengehalt von bis zu 1,8 Mol-% aufweist. Die Klebeschicht auf Butylkautschuk Basis wird aufgrund ihrer Unpolarität als vorteilhaft gegenüber den bekannten polaren Ethylen-Vinylacetat-Klebemassen beschrieben. Optional wird noch eine Haftvermittlerschicht zwischen die Klebeschicht und die thermoplastische Folienschicht angeordnet. Bei dieser handelt es sich um ein Polyolefin geringerer Dichte, Blends verschiedener Polyolefine oder Blends der Komponenten aus Trägerschicht und Klebemasse. Die Herstellung kann auf Kalandern und Blasanlagen erfolgen, vorzugsweise wird auf Cast-Anlagen nach dem Foliengießverfahren gearbeitet.

Aus DE 10 2005 009 664 A1 sind Mehrschichtverbundsysteme bekannt, bestehend aus mindestens zwei chemisch verschieden aufgebauten Folien mit einer geringen Haftung untereinander und einem Haftvermittler zwei Folien, bei dem es sich um ein Ethylen/Vinylacetat Copolymer mit einem Vinylacetat-Gehalt im Bereich von 35 bis 85 Gew.% handelt. Als Materialien für die Folienschichten werden Polyester sowie Polyamide, Cycloolefin-Copolymere, EthylenVinylalkohol, PVC und Polystyrol eingesetzt. Die Herstellung der Folien kann sowohl über einen Folienextruder erfolgen als auch durch Blasfolienextrusion oder durch Extrusionsbeschichtung der Mehrschichtfolien auf vorhandene Folienverbunde.

**Zusammenfassend ist festzustellen**, dass bereits eine Vielzahl unterschiedlicher Mehrschichtverbundfolien bekannt sind. Ein Nachteil besteht darin, dass häufig komplexe Abmischungen der Basispolymeren mit verschiedensten anderen Substanzen bzw. Additiven in den jeweiligen Schichten "komponiert" werden, wodurch das Gesamtverfahren und auch die resultierende Verbundfolie aufwändig und teurer wird. Ein weitere Nachteil ist, dass derartige Mehrschichtverbundfolien bisher überwiegend entweder über Foliengießverfahren (sog. "castextrusion") hergestellt werden, indem die Klebemasse entweder aus Lösung oder aus der Schmelze auf die Trägerfolie (optional bereits mit Vorstrich oder Haftvermittlerschicht versehen) aufgebracht wird, oder aber indem eine 3-Schichtflachfoliencoextrusion durchgeführt wird. Das Foliengießerfahren ist zeitaufwändig, da die Schichten sukkzessive zeitlich nacheinander gegossen werden, und somit aus wirtschaftlicher Sicht weniger attraktiv. Das Verfahren der 3-Schichtflachfoliencoextrusion ist dahingehend nachteilig, dass man bei der Durchführung an Grenzen stößt, wenn es um die Herstellung von Folien mit sehr geringen Schichtdicken geht, und auch die Raum-Zeit Ausbeuten noch Verbesserungspotential bieten. Gleichzeitig können durch die bekannten Verfahren nicht alle gewünschten Typen von Mehrschichtfolien hergestellt werden.

Aufgrund des hohen Bedarfs an Mehrschichtverbundfolien bestand somit die Aufgabe der vorliegenden Erfindung darin, sowohl ein verbessertes und einfacheres Herstellungsverfahren als auch auf diesem Weg neue Mehrschichtverbundfolien bereitzustellen.

Diese Aufgabe wird durch eine Mehrschichtverbundfolie aus mindestens drei Schichten gelöst, enthaltend
1) mindestens eine klebende Deckschicht aufgebaut aus mindestens einem α-Olefin-Vinylacetat-Copolymer mit einem Vinylacetat-Gehalt von ≥ 40 Gew.-%, bevorzugt von ≥ 45 Gew.-%, bezogen auf das Gesamtgewicht des α-Olefin-Vinylacetat-Copolymeren (1),
2) mindestens einer darunter liegenden Mittelschicht auf Basis eines α-Olefin-Vinylacetat-Copolymeren mit einem Vinylacetat-Gehalt im Bereich von 12 bis 20 Gew.%, bevorzugt im Bereich von 12 bis weniger als 20 Gew.%, bezogen auf das Gesamtgewicht des α-Olefin-Vinylacetat-Copolymeren (2) und
3) mindestens eine darunter befindliche Trägerschicht auf Basis eines Polyolefins.

Bevorzugt handelt es sich bei der erfindungsgemäßen Mehrschichtverbundfolie um ein 3-Schichtfolie aus einer Deckschicht, einer Mittelschicht und einer Trägerschicht.

Gegenstand der Erfindung ist ferner ein Verfahren zur Herstellung dieser Mehrschichtverbundfolien durch Blasfolienextrusion, indem man das α-Olefin-Vinylacetat-Copolymer mit einem Vinylacetat-Gehalt von ≥ 40 Gew.-% (1), das α-Olefin-Vinylacetat-Copolymer mit einem Vinylacetat-Gehalt im Bereich von 12 bis 20 Gew.% (2) sowie das Polyolefin (3) jeweils über einen eigenen Extruder zum Kern einer Blasfolienanlage transportiert und dort durch eine Düse zur erfindungsgemäßen Mehrschichtverbundfolie formt.

Gegenstand der Erfindung ist ferner der Einsatz der erfindungsgemäßen Mehrschichtverbundfolie für die Verpackung von Produkten und zum Schutz von Materialoberflächen.

### Klebende Deckschicht (1):

Die erfindungsgemäß eingesetzten α-Olefin-Vinylacetat-Copolymere zeichnen sich durch hohe Vinylacetat-Gehalte von ≥ 40 Gew.-%, bezogen auf das Gesamtgewicht des α-Olefin-Vinylacetat-Copolymeren, bevorzugt durch Vinylacetatgehalte von ≥ 45 Gew.-% aus, jeweils bezogen auf das Gesamtgewicht der α-Olefin-Vinylacetat-Copolymere. Üblicherweise beträgt der Vinylacetat-Gehalt der erfindungsgemäß eingesetzten α-Olefin-Vinylacetat-Copolymere ≥ 40 Gew.-% bis 98 Gew.-%, bevorzugt ≥ 45 Gew.-% bis 90 Gew.-% und besonders bevorzugt ≥ 45 Gew.-% bis 80 Gew.-%, und der α-Olefin-Gehalt entsprechend 2 Gew.-% bis ≤ 60 Gew.-%, bevorzugt 10 Gew.-% bis ≤ 55 Gew.-% und besonders bevorzugt 20 Gew.-% bis ≤ 55 Gew.-%, wobei die Gesamtmenge an Vinylacetat und α-Olefin 100 Gew.-% beträgt.

In einer weiteren Ausführungsform kann das erfindungsgemäß eingesetzte α-Olefin-Vinylacetat-Copolymer (1) neben den auf dem α-Olefin und Vinylacetat basierenden Wiederholungseinheiten ein oder mehrere weitere Comonomereinheiten aufweisen, so dass Terpolymere resultieren, z.B. basierend auf Vinylestern und/oder (Meth)acrylaten als Termonomeren. Die weiteren Comonomereinheiten sind, wenn überhaupt weitere Comonomereinheiten in dem α-Olefin-Vinylacetat-Copolymer vorliegen, in einem Anteil von bis zu 10 Gew.-%, bezogen auf das Gesamtgewicht des α-Olefin-Vinylacetat-Copolymeren vorhanden, wobei sich der Anteil der auf dem α-Olefin basierenden Monomereinheiten entsprechend verringert. Somit können z.B. α-Olefin-Vinylacetat-Copolymere eingesetzt werden, die aus ≥ 40 Gew.-% bis 98 Gew.-%, bevorzugt ≥ 45 Gew.-% bis 90 Gew.-%, Vinylacetat, 2 Gew.-% bis ≤ 60 Gew.-%, bevorzugt 10 Gew.% bis ≤ 55 Gew.-%, α-Olefin und 0 bis 10 Gew.-% mindestens eines weiteren Comonomeren aufgebaut sind, wobei die Gesamtmenge an Vinylacetat, α-Olefin und dem weiteren Comonomeren 100 Gew.-% beträgt.

Als α-Olefine können in den erfindungsgemäß eingesetzten α-Olefin-Vinylacetat-Copolymeren alle bekannten α-Olefine verwendet werden. Bevorzugt ist das α-Olefin ausgewählt aus Ethen, Propen, Buten, insbesondere n-Buten und i-Buten, Penten, Hexen, insbesondere 1-Hexen, Hepten und Octen, insbesondere 1-Octen, es können jedoch auch höhere Homologe der genannten α-Olefine eingesetzt werden. Die α-Olefine können des Weiteren Substituenten tragen, insbesondere C₁-C₅-Alkylreste. Bevorzugt tragen die α-Olefine jedoch keine weiteren Substituenten. Des Weiteren ist es möglich, in den erfindungsgemäß eingesetzten α-Olefin-Vinylacetat-Copolymeren Mischungen zweier oder mehrerer verschiedener α-Olefine einzusetzen. Bevorzugt ist es jedoch, keine Mischungen verschiedener α-Olefine einzusetzen. Bevorzugte α-Olefine sind Ethen und Propen. In der erfindungsgemäßen Mehrschichtverbundfolie wird besonders bevorzugt ein Ethylen-Vinylacetat-Copolymer eingesetzt.

Das α-Olefin-Vinylacetat-Copolymer (1), bevorzugt Ethylen-Vinylacetat-Copolymer, wird nach einem Lösungspolymerisations-Verfahren bei einem Druck von 300 bis 500 bar, bevorzugt bei einem Druck hergestellt, wobei im Allgemeinen radikalische Initiatoren verwendet werden.

Üblicherweise werden die erfindungsgemäß bevorzugt eingesetzten Ethylen-Vinylacetet-Copolymere (1) mit den angegebenen hohen Vinylacetat-Gehalten als EVM-Copolymere bezeichnet, wobei das "M" in der Bezeichnung das gesättigte Rückgrat der Methylen-Hauptkette des EVMs andeutet.

Geeignete Herstellungsverfahren für die erfindungsgemäß eingesetzten α-Olefin-Vinylacetat-Copolymere sind zum Beispiel in EP-A 0 341 499, EP-A 0 510 478 und DE-A 38 25 450 genannt.

Die erfindungsgemäß verwendeten α-Olefin-Vinylacetat-Copolymere (1), bevorzugt Ethylen-Vinyl-acetat-Copolymere, weisen im Allgemeinen MFI-Werte (g/10 min), gemessen nach ISO 1133 bei 190 °C und einer Last von 21,1 N, von 1 bis 40, bevorzugt 1 bis 10 und besonders bevorzugt 2 bis 6 auf.

Die Mooney-Viskositäten gemäß DIN 53 523 ML 1+4 bei 100 °C betragen im Allgemeinen 3 bis 50, bevorzugt 4 bis 35 Mooney-Einheiten.

Das zahlenmittlere durchschnittliche Molekulargewicht, bestimmt mittels GPC, beträgt im Allgemeinen von 5000 g/mol bis 200000 kg/mol, bevorzugt 10000 g/mol bis 100000 g/mol.

Besonders bevorzugt werden zur Herstellung der erfindungsgemäßen Mehrschichtverbundfolie Ethylen-Vinylacetat-Copolymere (1) eingesetzt, die zum Beispiel unter den Handelnamen Levapren^{®} oder Levamelt^{®} von der Lanxess Deutschland GmbH kommerziell erhältlich sind, z.B. die Typen Levamelt^{®} 450, Levamelt^{®} 600, Levamelt^{®} 700, Levamelt^{®} 800 und Levamelt^{®} 900 mit einem Gehalt von 45 +1,5 Gew.-% Vinylacetat, 60±1,5 Gew.-% Vinylacetat, 70±1,5 Gew.-% Vinylacetat, 80±2 Gew.-% Vinylacetat bzw. 90±2 Gew.-% Vinylacetat.

Bevorzugterweise sind in der Klebeschicht keine Polyalkylenglykole, Polyether oder Derivate davon als Zusatzstoffe neben dem α-Olefin-Vinylacetat-Copolymer (1) enthalten.

Dem α-Olefin-Vinylacetat-Copolymer (1) mit einem Vinylacetat-Gehalt von ≥ 40 Gew.-%, bezogen auf das Gesamtgewicht des α-Olefin-Vinylacetat-Copolymeren, können zur Optimierung der Eigenschaften optional auch noch geringe Mengen Polyethylen zugesetzt werden, wodurch sich die Haftwerte reduzieren lassen.

Die erfindungsgemäß verwendeten α-Olefin-Vinylacetat-Copolymere (1) sind bevorzugterweise unvernetzt.

### Mittelschicht:

Die erfindungsgemäß Mehrschichtverbundfolie weist unterhalb der klebenden Deckschicht (1) mindestens eine Mittelschicht auf Basis eines α-Olefin-Vinylacetat-Copolymeren (2) mit einem Vinylacetat-Gehalt im Bereich von 12 bis 20 Gew.%, bevorzugt 12 bis weniger als 20 Gew.%, besonders bevorzugt 15 bis 19 Gew.% und insbesondere bevorzugt 16 bis 18 Gew.%, bezogen auf das Gesamtgewicht des α-Olefin-Vinylacetat-Copolymeren auf.

Diese Mittelschicht, auch "Tielayer" oder "Kompatibilisator" genannt, hat die Funktion eines Haftvermittlers zwischen Klebeschicht (1) und Trägerschicht (3), d.h. sie soll eine gute Anbindung zwischen der klebenden Deckschicht und der/den darunter liegenden Trägerschicht(en) gewährleisten.

Für die Definition des α-Olefins in dieser Mittelschicht wird auf die Definition des α-Olefins für die klebende Deckschicht (1) verwiesen.

Diese α-Olefin-Vinylacetat-Copolymeren (2) mit einem Vinylacetat-Gehalt im Bereich von 12 bis 20 Gew.%, bezogen auf das Gesamtgewicht des α-Olefin-Vinylacetat-Copolymeren, sind nach dem Fachmann geläufigen Methoden herstellbar. Üblicherweise erfolgt die Herstellung durch Massepolymerisation bei einem Druck im Bereich von 1000 bis 3000 bar und einer Temperatur im Bereich von 150 bis 350 °C. Derartige Polymerisationsverfahren sind in der Literatur hinlänglich beschrieben.

Darüberhinaus sind α-Olefin-Vinylacetat-Copolymeren mit einem Vinylacetat-Gehalt im Bereich von 12 bis 20 Gew.% bezogen auf das Gesamtgewicht des α-Olefin-Vinylacetat-Copolymeren beispielsweise unter den Handelsnamen Escorene^{™} von Exxon Mobile sowie Elvaloy^{®} von Dupont käuflich erhältlich.

Die α-Olefin-Vinylacetat-Copolymeren (2) können sowohl in reiner Form als auch in Abmischung mit anderen polaren Olefin-Copolymeren eingesetzt werden. Andere polare Olefin-Copolymerisate können dabei in Mengen von bis zu 50 Gew Teilen%, bevorzugt 0,1 bis 5 Teilen % bezogen auf die α-Olefin-Vinylacetat-Copolymeren (2) zugesetzt werden. In Frage kommen z.B. Ethylen-Acrylat Copolymere, Ethylen-Acrylsäure- oder Ethylen-Methacrylsäure-Copolymer, die in Bezug auf Comonomergehalt und Viskosität so variiert werden können, dass je nach Anforderung Haftschichten mit einer hohen Kohäsionskraft erhalten werden.

### Rückenschicht:

Die erfindungsgemäße Mehrschichtverbundfolie weist unterhalb der/den Mittelschichten mindestens eine Rücken- oder Trägerschicht auf Basis eines Polyolefins auf. Bevorzugt handelt es sich um thermoplastische Folienschicht. Bevorzugt handelt es sich um eine Polyethylen- oder Polypropylen-Schicht, oder um eine Schicht aus einer Mischung aus Polyethylen und Polypropylen besonders bevorzugt sind LDPE-, Metallocen-PE- und LLDPE- Schichten.

Um die Rückenschicht witterungsstabil einzustellen, kann der Zusatz von Lichtschutzmitteln sinnvoll sein. Derartige Lichtschutzmittel für Polyolefine sind dem Fachmann aus der Literatur bekannt. Geeignet sind z.B. die sogenannten HALS Lichtschutzmittel. Möglich ist ferner der Einsatz von Antioxidantien. Auch der Einsatz von UV-Absorbern und Alterungsschutzmitteln kann je nach geplantem Verwendungszweck der Mehrschichtverbundfolie sinnvoll sein.

Die erfindungsgemäße Mehrschichtverbundfolie weist üblicherweise eine Dicke im Bereich von 20 bis 150 µm auf, bevorzugt im Bereich von 25 bis 110 µm und besonders bevorzugt im Bereich von 50 bis 100 µm Dabei besitzt
- die klebende Deckschicht auf Basis des α-Olefin-Vinylacetat-Copolymers mit einem Vinylacetat-Gehalt von ≥ 40 Gew.-%, bezogen auf das Gesamtgewicht des α-Olefin-Vinylacetat-Copolymeren üblicherweise eine Dicke im Bereich von 2,5 bis 40 µm, bevorzugt von 2,5 bis 30 µm, besonders bevorzugt von 5 bis 25 µm,
- die darunter liegende Mittelschicht auf Basis eines α-Olefin-Vinylacetat-Copolymeren mit einem Vinylacetat-Gehalt im Bereich von 12 bis 20 Gew.%, bevorzugt 12 bis weniger als 20 Gew.%, bezogen auf das Gesamtgewicht des α-Olefin-Vinylacetat-Copolymeren, üblicherweise eine Dicke im Bereich von 2,5 bis 40 µm, bevorzugt von 2,5 bis 30 µm und besonders bevorzugt von 5 bis 25 µm,
- die darunter liegenden Rückenschicht auf Basis eines Polyolefins üblicherweise eine Dicke im Bereich von 15 bis 70 µm, bevorzugt von 15 bis 50 µm und insbesondere von 40 bis 50 µm.

### Herstellungsverfahren:

Bei dem erfindungsgemäßen Verfahren zur Herstellung der Mehrschichtverbundfolie handelt es sich um ein Blasfolienextrusionsverfahren. Die drei zwingenden Ausgangskomponenten, d.h. das α-Olefin-Vinylacetat-Copolymer mit einem Vinylacetat-Gehalt von ≥ 40 Gew.-% (1), das α-Olefin-Vinylacetat-Copolymer mit einem Vinylacetat-Gehalt im Bereich von 12 bis 20 Gew.% (2) sowie das Polyolefin (3), werden in drei separaten Extrudern erwärmt, geknetet und über drei Düsen der Blasfolienanlage zugeführt, durch die aus allen drei Ausgangskomponenten (1)-(3) unter Zuführung von Luft eine Folie geformt wird, die Folie nachfolgend abgekühlt und aufgewickelt oder abgelegt wird.

Im ersten Schritt werden die drei Ausgangskomponenten in jeweils einen Extruder eindosiert, in dem unter Erwärmung eine Materialhomogenisierung und ein kontinuierlicher Materialtransport durch die Schneckenpresse erfolgt. Durch die Extruder wird die jeweilige Komponente zu ringförmig angeordneten Düsen transportiert, die durch eine homogene Schmelzeverteilung einen Folienschlauch entstehen lassen, der durch gleichmäßig zugeführtes Luftvolumen aufgeblasen und gekühlt wird. Durch nachgeschaltete Transport- und Umlenkstufen wird er soweit abgekühlt, dass er aufgewickelt werden kann.

Bei dem Aufwickelvorgang ist durch entsprechende Einstellung der Verfahrensparameter dafür Sorge zu tragen, dass sich die Folie nicht elektrostatisch auflädt und keine Falten bildet.

Das erfindungsgemäße Verfahren kann auch zur Herstellung von Mehrschichtverbundfolien eingesetzt werden, die mehr als 3 Schichten aufweisen, in diesem Fall werden entsprechend weitere Extruder zur Zuführung dieser zusätzlichen Komponenten dazu geschaltet.

Die Herstellung der Mehrschichtverbundfolie kann auf Blasfolienanlagen erfolgen, wie sie z.B. von den Unternehmen Kuhne, Kiefel, Reifenhäuser sowie Windmöller & Hölscher gebaut und vertrieben werden.

Die Temperaturen der drei Extruder werden dabei so eingestellt, dass die Viskositäten der Materialien annähernd im Gleichen im Bereich liegen. Hierbei sind die Schergeschwindigkeiten zu berücksichtigen.

Die erfindungsgemäßen Mehrschichtverbundfolien zeichnen sich durch eine hohe UV-Beständigkeit, eine gute Wärme- bzw. Kältebeständigkeit, eine hohe Zähigkeit als Schutz vor mechanischen Einwirkungen, gute Dehnbarkeiten, eine hinreichende Verklebungsfestigkeit bei Applikationen auf gewölbten Flächen und keine Rückstände beim Abziehen der Schutzfolie vom Untergrund aus. Die Tatsache, dass die Herstellung erstmals im großtechnischen Maßstab auch kontinuierlich über eine Blasfolienextrusion möglich ist, erhöht die Wirtschaftlichkeit substanziell. Im Gegensatz zu den selbstklebenden Schutzfolien, die aus dem Stand der Technik bereits bekannt sind, müssen bei den erfindungsgemäßen Schutzfolien in den einzelnen Folienschichten neben den Basispolymeren nicht zwingend zusätzliche Additive eingesetzt werden, um die gewünschten Eigenschaften zu erzielen.

### Figur 1:

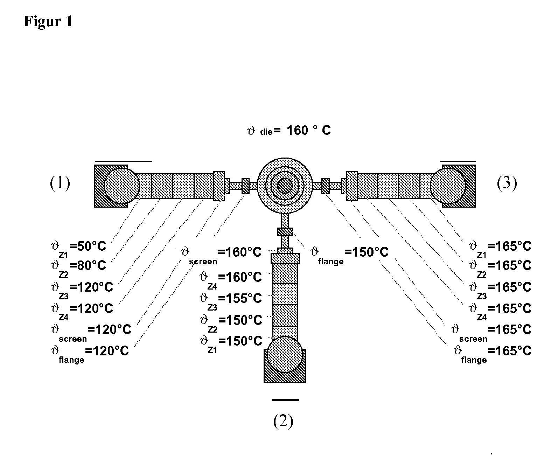

In **Figur 1** ist die Anordnung der drei Extruder mit den jeweiligen Temperatureinstellungen dargestellt, die in Beispiel 1 zur Herstellung der erfindungsgemäßen Mehrschichtverbundfolie verwendet wurden. Die Abkürzungen (1), (2) und (3) verdeutlichen, welchem Extruder welche der drei Komponenten zugeführt wurde.

In Figur 1 bedeuten:
(1) Levamelt^{®} 450 (Lanxess Deutschland GmbH)
(2) Ethylen-Vinylacetat-Copolymeren mit einem Vinylacetat-Gehalt von 18 Gew.% bezogen auf das Gesamtgewicht des α-Olefin-Vinylacetat-Copolymeren (2) (Escorene^{®}, ExxonMobil Chemical) und
(3) die darunter befindliche Trägerschicht aus Polyethylen.
   Bei den Temperaturangaben ϑ... handelt es sich um die Temperaturen des jeweiligen Extruderabschnitts bzw. der sich daran anschließenden Bauabschnitte der Blasfolienanlage.

### Beispiele:

Aus den in Tabelle 1 angegebenen Schichten wurde durch Blasfolienextrusion eine erfindungsgemäße Mehrschichtverbundfolie hergestellt.

**Tabelle 1:**

| **Schicht** | **Material** | | **MFI¹** | **Dichte** | **Dicke der Schicht** |
|---|---|---|---|---|---|
| Klebeschicht ("Adhesive layer") | EVM | Levamelt^{®} 450 (VA Gehalt = 45 Gew. %) | 6 g/10 min | 0,99 g/cm³ | 10µm |
| Haftvermittler-Schicht ("Tielayer") | EVA | VA Gehalt=18 Gew. % Escorene^{®}, ExxonMobil Chemical | 1,7 g/10 min | 0,940 g/cm³ | 10µm |
| Rückschicht ("Backing") | PE | Sabic 0863F | 0,85 g/10 min | 0,922 g/cm³ | 40µm |

| | | | | | |
|---|---|---|---|---|---|
| 1: gemessen bei 190 °C und 21.2 N | | | | | |

### Blasfolienanlage und Durchführung:

Die Herstellung der Mehrschichtverbundfolie erfolgte auf einer Blasfolienanlage der Firma Kiefel. Die Daten der drei verwendeten Kirion^{®} Extruder sind in Tabelle 2 zusammengefasst.

**Tabelle 2:**

| | **Extruder A** | **Extruder B** | **Extruder C** |
|---|---|---|---|
| Extruder Typ | 70F30D VLS | 80F30D VLS | 70F30D VLS |
| Schnecken Durchmesser [mm] | 70 | 80 | 70 |
| Schicht | Trägerschicht | Haftvermittlerschicht | Klebmasse |
| Gewichtsverhältnis [%] | 16,7% | 66,7% | 16,7% |
| Material | EVA | PE | Levamelt^{®} 450 |

| | | | |
|---|---|---|---|
| Die Betriebsparameter und -temperaturen finden sich in den nachfolgenden Tabellen 3 und 4. | | | |

**Tabelle 3:**

| | **Extruder A** | **Extruder B** | **Extruder C** |
|---|---|---|---|
| Schnecken-geschwindigkeit [1/min] | 61,6 | 73,1 | 78,0 |
| Output [kg/min] | 42,2 | 169,0 | 45,3 |
| Efficiency [%] | 16,0 | 38,0 | 18,0 |
| Schmelztemperatur ϑₘ [°C] | 176 | 187 | 143 |
| Melt pressure pₘ [bar] | 185,0 | 313,0 | 190,0 |
| Schichtdicke h₁ [µm] | 9,9 | 40,3 | 10,0 |
| Filmgewicht [g/m] | 23,45 | 93,90 | 25,18 |

**Tabelle 4:**

| | **Extruder A** | **Extruder B** | **Extruder C** |
|---|---|---|---|
| Temperatur ϑ_{Z1} [°C] | 150 | 165 | 80 |
| Temperatur ϑ_{Z2} [°C] | 150 | 165 | 90 |
| Temperatur ϑ_{Z3} [°C] | 155 | 165 | 115 |
| Temperatur ϑ_{Z4} [°C] | 160 | 165 | 120 |
| Temperatue ϑ_{screen} [°C] | 160 | 165 | 120 |
| Temperatur ϑ_{flange} [°C] | 150 | 165 | 120 |
| Temperatur ϑ_{die} [°C] | 160 | | |

Die Zuordnung der in Tabelle 4 genannten Temperaturen zum jeweiligen Extruderabschnitt ist Figur 2 zu entnehmen.

## Patentansprüche

1. Mehrschichtverbundfolie aus mindestens drei Schichten enthaltend
1) mindestens eine klebende Deckschicht aufgebaut aus mindestens einem α-Olefin-Vinylacetat-Copolymer mit einem Vinylacetat-Gehalt von ≥ 40 Gew.-%, bevorzugt von ≥ 45 Gew.-%, bezogen auf das Gesamtgewicht des α-Olefin-Vinylacetat-Copolymeren (1),
2) mindestens einer darunter liegenden Mittelschicht auf Basis eines α-Olefin-Vinylacetat-Copolymeren mit einem Vinylacetat-Gehalt im Bereich von 12 bis 20 Gew.%, bevorzugt im Bereich von 12 bis weniger als 20 Gew.%, bezogen auf das Gesamtgewicht des α-Olefin-Vinylacetat-Copolymeren (2) und
3) mindestens eine darunter befindliche Trägerschicht auf Basis eines Polyolefins.

2. Mehrschichtverbundfolie nach Anspruch 1, worin die klebende Deckschicht (1) aufgebaut ist aus mindestens einem α-Olefin-Vinylacetat-Copolymer mit einem Vinylacetat-Gehalt von ≥ 45 Gew.-%, jeweils bezogen auf das Gesamtgewicht des α-Olefin-Vinylacetat-Copolymers.

3. Mehrschichtverbundfolie nach Anspruch 1, worin die klebende Deckschicht (1) aufgebaut ist aus mindestens einem α-Olefin-Vinylacetat-Copolymer, bevorzugt Ethylen-Vinylacetat-Copolymer mit einem Vinylacetat-Gehalt von ≥ 40 Gew.-% bis 98 Gew.-%, bevorzugt ≥ 45 Gew.-% bis 90 Gew.-% und besonders bevorzugt ≥ 45 Gew.-% bis 80 Gew.-%, und einem α-Olefin-Gehalt, bevorzugt Ethylen-Gehalt, von 2 Gew.-% bis ≤ 60 Gew.-%, bevorzugt 10 Gew.-% bis ≤ 55 Gew.-% und besonders bevorzugt 20 Gew.-% bis ≤ 55 Gew.-%, wobei die Gesamtmenge an Vinylacetat und α-Olefin, bevorzugt Ethylen, 100 Gew.-% beträgt.

4. Mehrschichtverbundfolie nach Anspruch 1, worin die klebende Deckschicht (1) aufgebaut ist aus mindestens einem α-Olefin-Vinylacetat-Copolymer, bevorzugt Ethylen-Vinylacetat-Copolymer, mit einem MFI-Wert (g/10 min), gemessen nach ISO 1133 bei 190 °C und einer Last von 21,1 N, von 1 bis 40, bevorzugt 1 bis 10, besonders bevorzugt 2 bis 6.

5. Mehrschichtverbundfolie nach Anspruch 1, worin die klebende Deckschicht (1) aufgebaut ist aus mindestens einem α-Olefin-Vinylacetat-Copolymer, bevorzugt Ethylen-Vinylacetat-Copolymer, mit einer Mooney-Viskosität gemäß DIN 53 523 ML 1+4 bei 100 °C im Bereich von 3 bis 50, bevorzugt 4 bis 35 Mooney-Einheiten.

6. Mehrschichtverbundfolie nach Anspruch 1, worin die klebende Deckschicht (1) aufgebaut ist aus mindestens einem α-Olefin-Vinylacetat-Copolymer, bevorzugt Ethylen-Vinylacetat-Copolymer, mit einem zahlenmittleren durchschnittliche Molekulargewicht, bestimmt mittels GPC, im Bereich von 5000 g/mol bis 200000 kg/mol und bevorzugt von 10000 g/mol bis 100000 g/mol.

7. Mehrschichtverbundfolie nach Anspruch 1, worin die klebende Deckschicht (1) aufgebaut ist aus mindestens einem α-Olefin-Vinylacetat-Copolymer, bevorzugt Ethylen-Vinylacetat-Copolymer, welches unvernetzt ist.

8. Mehrschichtverbundfolie nach Anspruch 1, worin die Mittelschicht auf einem α-Olefin-Vinylacetat-Copolymeren (2) mit einem Vinylacetat-Gehalt im Bereich von 12 bis 20 Gew.%, bevorzugt 12 bis weniger als 20 Gew.%, besonders bevorzugt 15 bis 19 Gew.% und insbesondere bevorzugt 16 bis 18 Gew.%, bezogen auf das Gesamtgewicht des α-Olefin-Vinylacetat-Copolymeren basiert.

9. Mehrschichtverbundfolie nach Anspruch 1, worin es sich bei der Rücken- oder Trägerschicht um eine Polyethylen- und Polypropylen-Schicht, bevorzugt um eine LDPE-, Metallocen-PE- und LLDPE- Schicht handelt.

10. Mehrschichtverbundfolie nach Anspruch 1 mit einer Dicke im Bereich von 20 bis 150 µm auf, bevorzugt im Bereich von 25 bis 110 µm und besonders bevorzugt 50 bis 100 µm, wobei
- die klebende Deckschicht (1) auf Basis des α-Olefin-Vinylacetat-Copolymers mit einem Vinylacetat-Gehalt von ≥ 40 Gew.-%, bezogen auf das Gesamtgewicht des α-Olefin-Vinylacetat-Copolymeren eine Dicke im Bereich von 2,5 bis 40 µm, bevorzugt von 2,5 bis 30 µm, besonders bevorzugt von 5 bis 25 µm,
- die darunter liegende Mittelschicht (2) auf Basis eines α-Olefin-Vinylacetat-Copolymeren mit einem Vinylacetat-Gehalt im Bereich von 12 bis 20 Gew.%, bevorzugt 12 bis weniger als 20 Gew.%, bezogen auf das Gesamtgewicht des α-Olefin-Vinylacetat-Copolymeren, eine Dicke im Bereich von 2,5 bis 40 µm, bevorzugt von 2,5 bis 30 µm und besonders bevorzugt von 5 bis 25 µm, und
- die darunter liegenden Rückenschicht (3) auf Basis eines Polyolefins eine Dicke im Bereich von 15 bis 70 µm, bevorzugt von 15 bis 50 µm und insbesondere von 40 bis 50 µm aufweist.

11. Verfahren zur Herstellung der Mehrschichtverbundfolie nach Anspruch 1, **dadurch gekennzeichnet, dass** es sich um eine Blasfolienextrusion handelt, wobei das α-Olefin-Vinylacetat-Copolymer mit einem Vinylacetat-Gehalt von ≥ 40 Gew.-% (1), das α-Olefin-Vinylacetat-Copolymer mit einem Vinylacetat-Gehalt im Bereich von 12 bis 20 Gew.% (2) sowie das Polyolefin (3) über Extruder zum Kern einer Blasfolienanlage transportiert und dort durch eine Düse zur Mehrschichtverbundfolie geformt werden.

12. Verwendung der Mehrschichtverbundfolie nach einem oder mehreren der Ansprüche 1 bis Anspruch 1-10 für die Verpackung von Produkten und zum Schutz von Materialoberflächen.
